# FASCICULE DE BREVET EUROPEEN

(11) **EP 1 925 902 B1**
(45) Date de publication et mention de la délivrance du brevet: **13.05.2009**
(21) Numéro de dépôt: 07291366.8
(22) Date de dépôt: 15.11.2007
(51) Int. Cl.: F41G 7/30, G01S 3/784

(54) **Système de visée à écartomètre intégré**
Zielvorrichtung mit integriertem Abweichungsanzeiger
Sighting system with built-in deviation indicator

(30) Priorité: 21.11.2006 FR 0610165
(43) Date de publication de la demande: 28.05.2008
(73) Titulaire: MBDA France, 75016 Paris (FR)
(72) Inventeur: Solenne, Thierry, 91440 Bures sur Yvette (FR)
(74) Mandataire: Bonnetat, Christian

(56) Documents cités:
- EP-A1- 0 206 912
- EP-A1- 0 425 355
- EP-A1- 0 633 457
- EP-A1- 0 740 123
- US-A1- 2002 154 293

## Description

La présente invention concerne un système de visée à écartomètre intégré. Un tel système est particulièrement approprié à la localisation de missiles en vol en vue de leur guidage sur une cible, telle qu'un véhicule blindé ou un bunker.

Par le document US-4 710 028 (EP-0 206 912), on connaît un écartomètre permettant de localiser un missile qui vole dans la direction au moins approximative d'une cible et auquel est lié un émetteur optique engendrant des éclats lumineux successifs dans le proche infrarouge, ledit écartomètre comportant :
- un détecteur optique comportant une matrice d'éléments photosensibles aptes à détecter lesdits éclats lumineux successifs ;
- un système optique, qui regarde la scène dans laquelle se trouvent la cible et ledit missile et dans le plan focal duquel est disposé ledit détecteur optique ;
- des moyens électroniques de commande dudit détecteur optique aptes à déclencher des prises de vue de ladite scène par ce dernier ; et
- des moyens aptes à synchroniser des prises d'images dudit détecteur optique avec lesdits éclats lumineux successifs, le temps d'intégration des images correspondant à des prises de vue en synchronisme avec lesdits éclats lumineux est choisi au plus égal à 200 microsecondes.

Ainsi, dans un tel écartomètre connu, la position dans ladite matrice du ou des éléments photosensibles excité(s) par lesdits éclats lumineux successifs est représentative de la position dudit missile par rapport à l'axe dudit système optique.

Lorsqu'un tel écartomètre est utilisé dans un poste de tir de missiles à guidage en alignement, on l'associe à un dispositif de visée de jour (lunette) et/ou à un dispositif de visée de nuit (caméra thermique) à l'usage de l'opérateur dudit poste de tir. On obtient ainsi un système de visée composite avec écartomètre permettant audit opérateur de suivre une cible avec l'un ou l'autre desdits dispositifs de visée suivant les conditions de luminosité, l'écartomètre fournissant des informations de position du missile en vol à des moyens de guidage de ce dernier vers ladite cible.

Dans un tel système de visée composite, il existe donc une voie écartométrie et au moins une voie visée, chacune desdites voies ayant son propre système optique, son propre détecteur et sa propre électronique (visée thermique), ..., ce qui rend ledit système complexe, coûteux, lourd et volumineux. De tels inconvénients sont particulièrement désavantageux lorsque ledit système de visée composite doit être porté par l'opérateur.

Ces inconvénients de complexité de coût, de masse et d'encombrement sont encore augmentés du fait qu'il est nécessaire de prévoir, pour la voie écartomètre, une voie optique à grand champ pour la prise en charge du missile par le poste de tir après lancement et une voie optique à champ réduit pour le guidage.

Par ailleurs, dans un tel système de visée composite, il est indispensable pour les performances que les axes des voies écartométrie et visée soient rigoureusement harmonisés et le restent pendant toute la durée de l'utilisation, ce qui nécessite des réglages de précision ou même un dispositif optique d'harmonisation supplémentaire et oblige à utiliser le système avec précaution, bien que les conditions d'utilisation ne le permettent généralement pas.

De plus, le dispositif de visée de jour (lunette) forme une voie optique directe apte à transmettre une agression laser jusqu'à l'opérateur.

Enfin, du fait que, dans un tel système de visée composite avec écartomètre, le missile est asservi à la ligne de visée du dispositif de visée de jour ou à celle du dispositif de visée de nuit, le guidage du missile est très sensible aux mouvements intempestifs ou mal contrôlés que l'opérateur imprime audit système (par exemple lors du délestage du missile hors de son tube de lancement, lors du suivi d'une cible à fort défilement, gênes pendant la visée, etc ...). Il en résulte un guidage perturbé pour le missile, qui, éventuellement, peut même sortir du champ dudit système.

La présente invention a pour objet un système de visée à écartomètre intégré permettant de remédier aux inconvénients précités.

A cette fin, selon l'invention, le système de visée apte à être dirigé vers une cible et comportant un écartomètre du type rappelé ci-dessus est remarquable en ce que :
- ledit détecteur optique est un détecteur infrarouge sensible non seulement au proche infrarouge dans le spectre d'émission de l'émetteur optique associé au missile, mais encore au moyen infrarouge compris entre 3 et 5 micromètres ;
- lesdits éléments photosensibles dudit détecteur infrarouge présentent, au moyen d'une optique appropriée, une résolution angulaire au moins aussi bonne que 0,3 mrad, de préférence aussi bonne que 0,1 mrad ;
- lesdits moyens électroniques de commande déclenchent des prises de vue de ladite scène par ledit détecteur infrarouge non seulement en synchronisme avec lesdits éclats lumineux, mais encore dans les intervalles entre lesdits éclats lumineux successifs et le temps d'intégration des images correspondant à des prises de vue dans les intervalles entre lesdits éclats lumineux successifs étant compris entre 1 et 5 millisecondes;
- des moyens de visualisation sont prévus pour visualiser les images résultant des prises de vue réalisées dans lesdits intervalles entre lesdits éclats lumineux successifs.

Ainsi, dans le système conforme à la présente invention, les images dans le moyen infrarouge constituent des images thermiques de la scène observée, aptes à servir à la visée de jour et à la visée de nuit. Le dispositif de visée de jour et le dispositif de visée de nuit ne sont donc plus nécessaires.

Le système selon l'invention ne comporte donc plus qu'une seule voie pour les fonctions localisation, visée de jour et visée de nuit, de sorte que ses constituants optiques, électroniques et mécaniques sont nettement simplifiés, plus compacts et plus légers, ce qui permet d'obtenir un poste de tir aisément portable par un fantassin et nettement moins cher que les postes de tir actuels. L'harmonisation des voies visée jour/nuit et de la voie localisation est parfaite, puisqu'il n'y a plus qu'un seul axe optique, ce qui élimine tout défaut résiduel et évite ainsi une architecture opto-mécanique complexe pour garantir les performances d'harmonisation, notamment en température, ou un dispositif de correction en température, tels que cela était nécessaire dans les solutions antérieures. La suppression de tout défaut d'harmonisation (biais) entre la visée et le guidage améliore la précision de guidage du système.

Par ailleurs, du fait que la matrice du détecteur infrarouge comporte un grand nombre d'éléments photosensibles (pixels) de haute résolution (au moins 388 x 284, mais de préférence 640 x 512 et même 1280 x 1024 pour assurer une bonne identification de la cible avant tir et une précision de guidage élevée), le système selon l'invention peut ne comporter qu'un seul champ de vue (de l'ordre de 6° à 8°), servant à la fois à la prise en charge du missile lors de son lancement et au guidage dudit missile vers la cible.

De plus, dans le système selon l'invention, il n'existe aucune voie de visée directe, de sorte que l'oeil de l'opérateur est protégé contre les agressions laser.

De préférence, la matrice dudit détecteur infrarouge est composée d'éléments photosensibles en antimoniure d'indium ou en tellurure de mercure et de cadmium.

Avantageusement, le temps séparant une prise de vue dans un intervalle entre deux éclats lumineux successifs et une prise de vue en synchronisme avec l'un de ces derniers est au plus égal à 15 millisecondes. Ainsi, ces deux prises de vue peuvent être considérées comme simultanées.

De préférence, ledit détecteur infrarouge fonctionne en mode IWR (Integrate While Read) de sorte que, pendant la lecture de chaque image correspondant à une prise de vue en synchronisme avec un éclat lumineux, lesdits moyens électroniques de commande peuvent déclencher une prise de vue additionnelle de ladite scène donnant naissance à une image additionnelle au moins approximativement identique (sauf en ce qui concerne l'image dudit éclat lumineux) à ladite image correspondant à une prise de vue en synchronisme avec un éclat lumineux. Il est alors prévu un processeur d'images apte à comparer cette dernière image et ladite image additionnelle pour en déduire sans ambiguïté la position de l'image dudit missile sur ledit détecteur. En effet, la différence entre ces deux images permet de ne conserver, dans l'image de différence, que les informations concernant l'éclat lumineux (c'est-à-dire le missile) tout en éliminant les sources de brouillage et les fausses émissions (effets solaires par exemple).

On remarquera que, grâce à la présente invention, on réalise l'acquisition quasi-simultanée, sur ledit détecteur infrarouge, des images desdits éclats et de la cible, ce qui permet la poursuite automatique différentielle du missile sur la cible, évitant ainsi les inconvénients dus aux mouvements de l'opérateur, notamment pour les missiles tirés à l'épaule. Le système conforme à la présente invention comporte alors un calculateur calculant l'écartométrie différentielle entre ledit missile et ladite cible à partir d'informations délivrées par ledit détecteur infrarouge et relatives aux positions respectives, sur ladite matrice, des images correspondant à des prises de vue en synchronisme avec lesdits éclats lumineux successifs et des images correspondant à des prises de vue dans les intervalles entre lesdits éclats lumineux.

Lesdits moyens aptes à synchroniser les prises d'images dudit détecteur infrarouge avec lesdits éclats lumineux successifs peuvent être temporaires ou permanents. Par ailleurs, lesdits éclats lumineux peuvent être déclenchés à partir dudit missile ou à partir dudit détecteur infrarouge. Dans ce dernier cas, lesdits moyens électroniques de commande du détecteur infrarouge peuvent être aptes à commander les émetteurs optiques d'au moins deux missiles afin que lesdits émetteurs optiques engendrent des suites imbriquées d'éclats lumineux.

Les figures du dessin annexé feront bien comprendre comment l'invention peut être réalisée. Sur ces figures, des références identiques désignent des éléments semblables.

La figure 1 montre le schéma synoptique d'un système de visée conforme à la présente invention.

La figure 2 est un schéma synoptique illustrant un exemple de réalisation du bloc électronique de commande et de traitement du détecteur infrarouge et de l'émetteur optique du missile.

La figure 3 montre, en fonction du temps t, quatre chronogrammes illustrant un mode de fonctionnement du système de visée selon l'invention.

La figure 4 montre également quatre chronogrammes illustrant une variante de fonctionnement du système de visée selon l'invention.

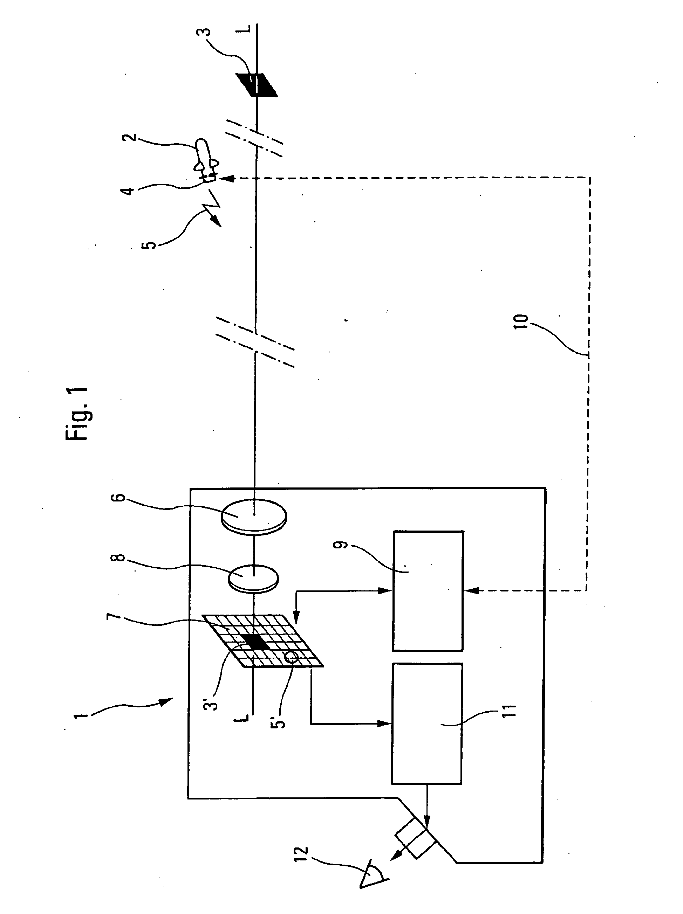

Le système de visée jour/nuit à écartomètre intégré 1, conforme à la présente invention et représenté sur la figure 1, est destiné au guidage en alignement d'un missile 2 sur une cible 3. Il comporte un axe unique L-L, au moins approximativement pointé sur ladite cible 3.

Le missile 2 est équipé d'un émetteur optique 4 engendrant des éclats lumineux 5 dans le proche infrarouge. Ledit émetteur optique 4 peut être une balise à éclats (lampe au xénon, diode laser, ...) ou bien un simple élément réfléchissant des éclats lumineux d'une balise fixe vers le système 1.

Le système de visée 1 comporte un unique système optique d'axe L-L et, dans le plan focal de celui-ci, un détecteur infrarouge plan 7, au moins approximativement orthogonal audit axe L-L du système 1. Un filtre 8 double passe-bande est disposé entre le système optique 6 et le détecteur infrarouge 7.

Le détecteur infrarouge 7 comporte, par exemple, une matrice d'éléments photosensibles en antimoniure d'indium ou en tellurure de mercure et de cadmium, disposée dans un dewar relié à un dispositif de refroidissement non représenté. Le filtre 8 peut également être du type refroidi et il peut être logé dans le refroidisseur du détecteur 7.

Le détecteur infrarouge 7 comporte un nombre élevé d'éléments photosensibles, par exemple 640x512 ou 1280x1024, et il peut fonctionner en mode "snapshot", c'est-à-dire que tous les éléments photosensibles intègrent au même moment la portion de scène qu'ils regardent. Le détecteur 7 présente un champ de l'ordre de 6° à 8° et une résolution angulaire au moins aussi bonne que 0,3 mrad, de préférence 0,1 mrad.

De plus, le détecteur infrarouge 7 est apte à fonctionner en mode IWR, c'est-à-dire qu'il peut intégrer une image alors que l'image précédente est en lecture.

Le détecteur infrarouge 7 est sensible, à la fois, dans le moyen infrarouge correspondant à la fenêtre spectrale de 3 à 5 µm pour pouvoir former des images thermiques et dans le proche infrarouge émis par les éclats lumineux 5. La sélectivité spectrale est assurée par le filtre 8. Dans le proche infrarouge, la bande passante du filtre 8 est adaptée de façon précise à la bande spectrale d'émission des éclats lumineux 5, ce qui permet d'éliminer en grande partie le rayonnement de la scène observée et donc garantir un rapport signal/bruit élevé, pendant les prises d'image des éclats lumineux 5. Dans le moyen infrarouge, la bande passante du filtre 8 est adaptée de façon précise à la réponse spectrale du détecteur 7, pour permettre la visée thermique avec un bon niveau de sensibilité.

Le système de visée 1 comporte un bloc électronique de commande et de traitement 9 permettant notamment la prise d'images 3' de la cible 3 et d'images 5' (représentatives du missile 2) des éclats 5 émis par l'émetteur 4 par le détecteur infrarouge 7. Une synchronisation (symbolisée par la ligne en pointillés 10 sur les figures) entre le bloc électronique 9 et l'émetteur 4 permet la prise des images 5' pendant la courte durée des éclats lumineux 5 (de quelques microsecondes à quelques dizaines de microsecondes).

Un bloc de visualisation 11, par exemple du type moniteur, est incorporé au système de visée 1 et est apte à fournir à un opérateur 1 2 l'image thermique dans le moyen infrarouge de la scène dans laquelle se trouve la cible 3.

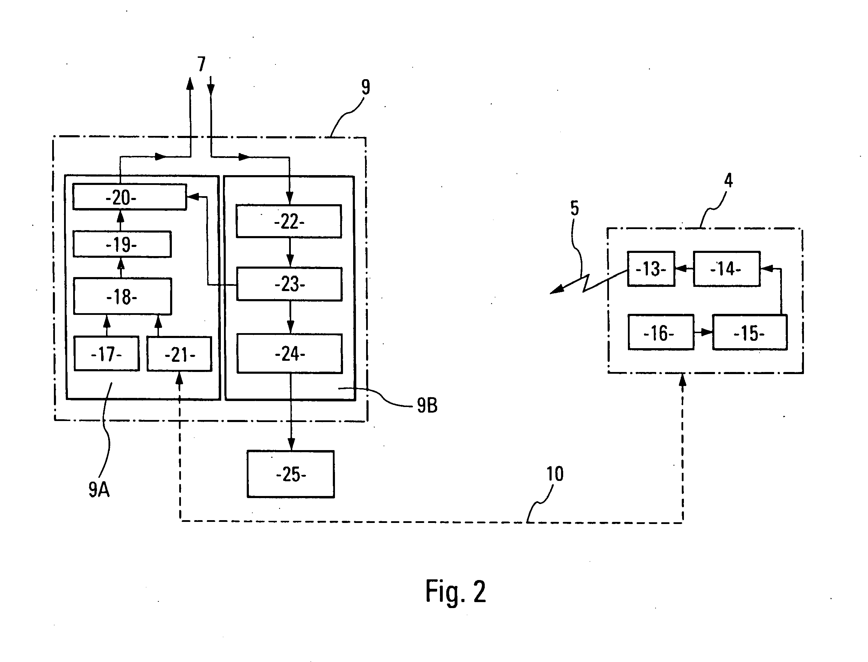

Comme l'illustre la figure 2, l'émetteur optique 4 comporte une source 13 (lampe au xénon, diode laser, ...) engendrant les éclats 5 et commandée par une électronique de déclenchement 14, elle-même commandée par un séquenceur 15 piloté par une base de temps 16.

Dans le mode de réalisation de la figure 2, le bloc électronique de commande et de traitement 9 comporte un dispositif 9A de commande du détecteur matriciel 7 et un dispositif 9B de traitement des images et d'élaboration des écartométries.

Le dispositif 9A comporte une base de temps 17, reliée à un processeur d'acquisition d'images 18, qui pilote le séquenceur 19 du détecteur 7. Le séquenceur 19 commande l'électronique de mise en oeuvre 20 de ce dernier. Une électronique d'interface 21 permet la synchronisation de prises d'images du détecteur 7 avec les éclats lumineux 5, grâce à la liaison 10 existant entre l'émetteur 4 et le bloc 9. La liaison de synchronisation 10 peut être établie avant tir du missile 2 et être maintenue pendant le vol de celui-ci par la stabilité des bases de temps 16 et 17. Elle peut également être établie par liaison hertzienne ou par un câble qui se déroule au fur et à mesure de l'avance du missile 2.

Le dispositif 9B comporte une mémoire d'images 22, reliée au détecteur 7, et un processeur de traitement d'images 23 en liaison avec la mémoire 22 et commandant un calculateur 24 d'écartométrie différentielle entre le missile 2 et la cible 3. Le calculateur 24 commande un calculateur 25 de guidage du missile 2.

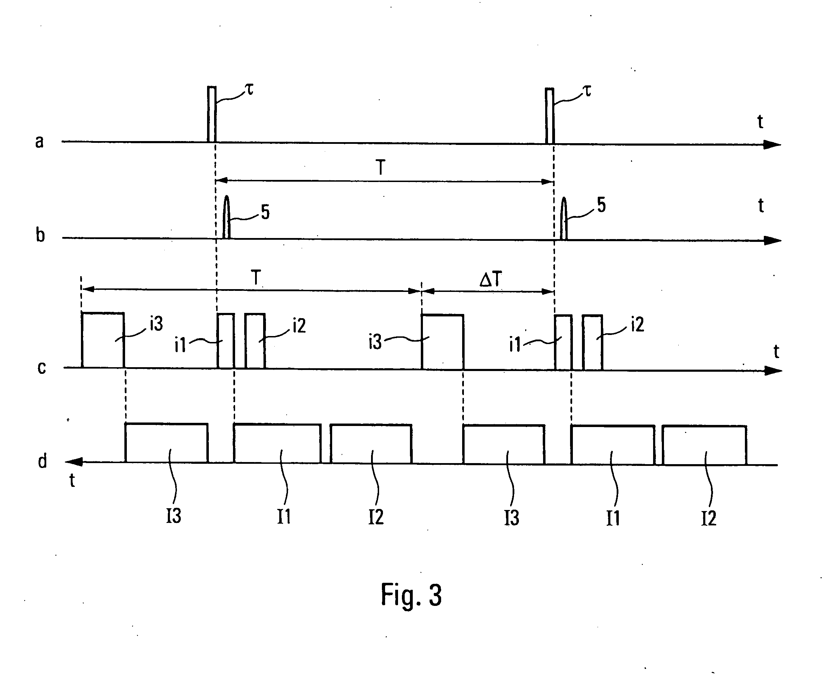

Sur les chronogrammes de la figure 3, on a illustré un exemple de fonctionnement du système 1 des figures 1 et 2. Sur le chronogramme a de cette figure 3, on a représenté les tops τ, émis par l'électronique de déclenchement 14 et entraînant l'émission des éclats 5 par la source 13 (voir le chronogramme b). Deux tops τ, ou deux éclats 5, consécutifs sont séparés par un temps T, éventuellement périodique de l'ordre de 40 à 50 ms.

En synchronisme avec l'émission de chaque top τ, le dispositif 9A ouvre une fenêtre d'intégration i1 de quelques dizaines de µs, permettant au détecteur 7 d'intégrer la scène qu'il observe à travers le système optique 6 et qui comporte l'éclat 5 correspondant (voir le chronogramme c).

Pendant la lecture de chaque image I1, intégrée pendant une fenêtre d'intégration i1, le dispositif 9A ouvre une autre fenêtre d'intégration i2, de préférence identique à la fenêtre d'intégration i1 mais temporellement très peu décalée par rapport au top τ correspondant. L'image I2 correspondant à une fenêtre d'intégration i2 représente donc la même scène que l'image I1 associée, toutefois sans l'image 5' de l'éclat 5. Par suite, l'image de différence I1-I2 formée dans le dispositif 9B ne comporte que l'image de l'éclat 5 et élimine complètement la scène dans laquelle se trouvent la cible 3 et le missile 2, y compris les éventuels brouilleurs qui pourraient s'y trouver.

Par ailleurs, à une distance temporelle ΔT des fenêtres d'intégration i1 (au plus de 15 ms), le dispositif 9A ouvre des fenêtres d'intégration longues i3, par exemple d'une durée de 0,5 ms à 5 ms, pour former des images I3 de la scène comportant la cible 3 et aptes à former les images thermiques affichées sur le bloc de visualisation 11.

Ainsi, sur le détecteur infrarouge 7, on forme, à des instants très rapprochés, les images 5' et 3' représentatives respectivement du missile 2 et de la cible 3. On connaît donc la distance séparant lesdites images sur ledit détecteur 7, ce qui permet au calculateur 24 d'effectuer l'écartométrie différentielle entre le missile 2 et la cible 3 et de commander en conséquence le calculateur de guidage 25. On peut donc s'affranchir des erreurs de guidage provenant de mouvements intempestifs appliqués au système de visée 1, aussi bien par l'opérateur que par le tir du missile 2. De plus, grâce à une telle écartométrie différentielle, l'opérateur peut, avant tir du missile 2, sélectionner précisément à l'intérieur de la cible 3 un point d'impact souhaité, sur lequel le missile sera guidé.

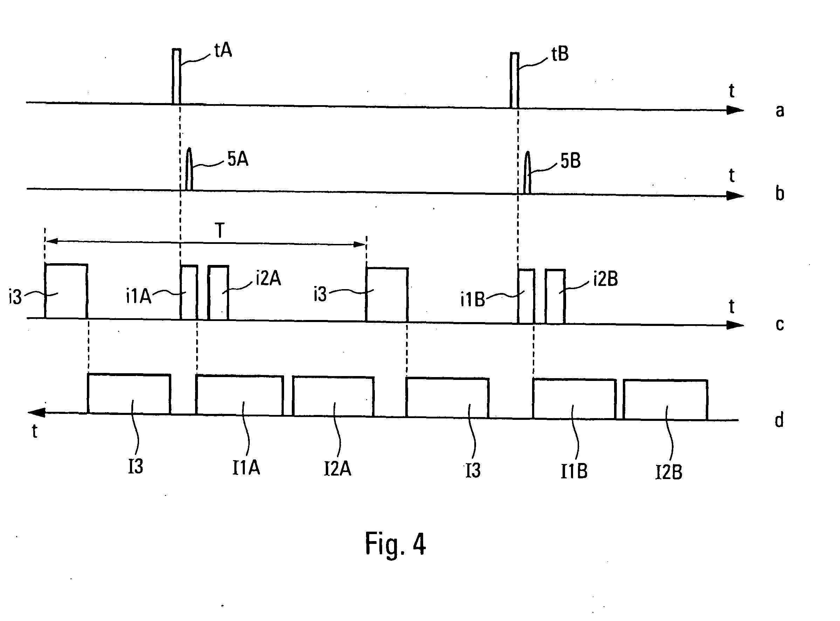

Dans l'exemple de fonctionnement illustré par les chronogrammes de la figure 4, les déclenchements des éclats 5 et des prises d'images ne sont plus commandés par les tops τ émis par l'électronique de déclenchement 14 de l'émetteur optique 4, mais par des tops émis par la base de temps 17 du dispositif 9A commandant le détecteur infrarouge 7. Il est alors possible de guider simultanément deux missiles 2 vers une ou deux cibles 3. Sur la figure 4, on a supposé que :
- la base de temps 17 émet des tops successifs de déclenchement tA pour la source 13 d'un missile 2A (non représenté) émettant des éclats 5A ;
- la base de temps 17 émet des tops successifs de déclenchement tB, intercalés dans les tops tA et déclenchant la source 13 d'un missile 2B (non représenté) émettant des éclats 5B ;
- de façon analogue à ce qui a été décrit ci-dessus à propos des fenêtres d'intégration i1, i2 et des images I1, I2, le détecteur infrarouge 7 :
   - ouvre des fenêtres d'intégration i1A pour former des images I1A de la scène dans laquelle se trouve le missile 2A pendant les éclats 5A,
   - ouvre des fenêtres d'intégration i2A pour former des images I2A de la scène dans laquelle se trouve le missile 2A entre les éclats 5A,
   - forme des images de différence I1A-I2A,
   - ouvre des fenêtres d'intégration i1B pour former des images I1B de la scène dans laquelle se trouve le missile 2B pendant les éclats 5B,
   - ouvre des fenêtres d'intégration i2B pour former des images I2B de la scène dans laquelle se trouve le missile 2B entre les éclats 5B,
   - forme les images de différence I1B-I2B, et
- de façon analogue à ce qui a été décrit en regard de la figure 3, le détecteur infrarouge 7 forme les images thermiques I3 de la scène, intégrées pendant les fenêtres d'intégration intermédiaires i3.

A la lumière de ce qui a été décrit précédemment, on comprendra que les missiles 2A et 2B peuvent ainsi être guidés vers une même cible ou sur deux cibles différentes, par écartométrie différentielle à partir des positions des images desdits missiles et desdites cibles sur ledit détecteur infrarouge 7.

## Revendications

1. Système de visée apte à être dirigé vers une cible (3) et comportant un écartomètre permettant de localiser au moins un missile (2) qui vole dans la direction au moins approximative de ladite cible et auquel est lié un émetteur optique (4) engendrant des éclats lumineux successifs (5) dans le proche infrarouge, ledit écartomètre comportant :
- un détecteur optique comportant une matrice d'éléments photosensibles aptes à détecter lesdits éclats lumineux successifs (5) ;
- un système optique (6), qui regarde la scène dans laquelle se trouvent ladite cible (3) et ledit missile (2) et dans le plan focal duquel est disposé ledit détecteur optique ;
- des moyens électroniques (9) de commande dudit détecteur optique aptes à déclencher des prises de vue de ladite scène par ce dernier et à former des images par intégration ; et
- des moyens (10) aptes à synchroniser des prises d'images dudit détecteur optique avec lesdits éclats lumineux successifs (5), le temps d'intégration des images correspondant à des prises de vue en synchronisme avec lesdits éclats lumineux étant au plus égal à 200 microsecondes,
**caractérisé en ce que** :
- ledit détecteur optique est un détecteur infrarouge (7) sensible non seulement au proche infrarouge dans le spectre d'émission de l'émetteur optique (4) associé au missile, mais encore au moyen infrarouge compris entre 3 et 5 micromètres ;
- lesdits éléments photosensibles dudit détecteur infrarouge (7) présentent, au moyen d'une optique appropriée, une résolution angulaire au moins aussi bonne que 0,3 mrad ;
- lesdits moyens électroniques de commande (9) déclenchent des prises de vue de ladite scène par ledit détecteur infrarouge (7) non seulement en synchronisme avec lesdits éclats lumineux (5), mais encore dans les intervalles entre lesdits éclats lumineux successifs, le temps d'intégration des images correspondant à des prises de vue dans les intervalles entre lesdits éclats lumineux successifs étant compris entre 1 et 5 millisecondes ; et
- des moyens de visualisation (11) sont prévus pour visualiser les images résultant des prises de vue réalisées dans lesdits intervalles entre lesdits éclats lumineux successifs.

2. Système selon la revendication 1,
**caractérisé en ce que** la résolution angulaire desdits éléments photosensibles est au moins aussi bonne que 0,1 mrad.

3. Système selon l'une des revendications 1 ou 2,
**caractérisé en ce que** ladite matrice du détecteur infrarouge (7) comporte au moins 640 x 512 éléments photosensibles.

4. Système selon la revendication 3,
**caractérisé en ce que** ladite matrice du détecteur infrarouge (7) comporte 1280 x 1024 éléments photosensibles.

5. Système selon l'une des revendications 1 à 4,
**caractérisé en ce que** la matrice dudit détecteur infrarouge (7) est composée d'éléments photosensibles en antimoniure d'indium.

6. Système selon l'une des revendications 1 à 4,
**caractérisé en ce que** la matrice dudit détecteur infrarouge (7) est composée d'éléments photosensibles en tellurure de mercure et de cadmium.

7. Système selon l'une quelconque des revendications 1 à 6,
**caractérisé en ce que** le temps séparant une prise de vue dans un intervalle entre deux éclats lumineux successifs (5) et une prise de vue en synchronisme avec l'un de ces derniers est au plus égal à 15 millisecondes.

8. Système selon l'une des revendications 1 à 7,
**caractérisé en ce que**, pendant la lecture de chaque image correspondant à une prise de vue en synchronisme avec un éclat lumineux, lesdits moyens électroniques de commande (9) déclenchent une prise de vue additionnelle de ladite scène donnant naissance à une image additionnelle dont le temps d'intégration est au moins approximativement identique à celui de ladite image correspondant à une prise de vue en synchronisme avec un éclat lumineux et **en ce qu'**il est prévu un processeur d'images (11) apte à comparer cette dernière image et ladite image additionnelle pour en déduire la position de l'image dudit missile sur ledit détecteur.

9. Système selon l'une quelconque des revendications 1 à 8,
**caractérisé en ce qu'**il comporte un calculateur (24) calculant l'écartométrie différentielle entre ledit missile (2) et ladite cible (3) à partir d'informations délivrées par ledit détecteur infrarouge et relatives aux positions respectives, dans ladite matrice, des images (5') correspondant à des prises de vue en synchronisme avec lesdits éclats lumineux successifs (5) et des images (3') correspondant à des prises de vue dans les intervalles entre lesdits éclats lumineux (5), intégrées entre 1 et 5 millisecondes.

10. Système selon l'une quelconque des revendications 1 à 9,
**caractérisé en ce que** lesdits moyens (10) aptes à synchroniser les prises d'images dudit détecteur infrarouge (7) avec lesdits éclats lumineux successifs (5) sont temporaires.

11. Système selon l'une quelconque des revendications 1 à 9,
**caractérisé en ce que** lesdits moyens (10) aptes à synchroniser les prises d'images dudit détecteur infrarouge (7) avec lesdits éclats lumineux successifs (5) sont permanents.

12. Système selon l'une quelconque des revendications 1 à 11,
**caractérisé en ce que** lesdits éclats lumineux (5) sont déclenchés à partir dudit missile (2).

13. Système selon l'une quelconque des revendications 1 à 11,
**caractérisé en ce que** lesdits éclats lumineux (5) sont déclenchés à partir des moyens électroniques de commande (9) dudit détecteur infrarouge (7).

14. Système selon la revendication 13,
**caractérisé en ce que** lesdits moyens électroniques de commande (9) sont aptes à commander les émetteurs optiques (4) d'au moins deux missiles afin que lesdits émetteurs optiques (4) engendrent des suites imbriquées d'éclats lumineux (5A, 5B).

## Claims

1. An aiming system able to be directed towards a target (3) and comprising a deviation meter making it possible to locate at least one missile (2) flying at least approximately in the direction of said target and to which is linked an optical emitter (4) generating successive light flashes (5) in the near infrared, said deviation meter comprising:
- an optical detector comprising a matrix of photosensitive elements able to detect said successive light flashes (5);
- an optical system (6), which observes the scene in which said target (3) and said missile (2) are located and in the focal plane of which is positioned said optical detector;
- electronic means (9) of controlling said optical detector which are able to trigger snapshots of said scene by the latter and to generate images by integration; and
- means (10) able to synchronize snapshots of said optical detector with said successive light flashes (5), the integration time of the images corresponding to snapshots in synchronism with said light flashes being at most equal to 200 microseconds,
**characterized in that:**
- said optical detector is an infrared detector (7) sensitive not only to the near infrared in the emission spectrum of the optical emitter (4) associated with the missile, but also to the mid-infrared between 3 and 5 micrometers;
- said photosensitive elements of said infrared detector (7) have, by means of an appropriate optical system, an angular resolution at least as good as 0.3 mrad;
- said electronic control means (9) trigger snapshots of said scene by said infrared detector (7) not only in synchronism with said light flashes (5), but also in the intervals between said successive light flashes, the integration time of the images corresponding to snapshots in the intervals between said successive light flashes being between 1 and 5 milliseconds; and
- viewing means (11) are provided to view the images resulting from the snapshots taken in said intervals between said successive light flashes.

2. The system as claimed in claim 1,
**characterized in that** the angular resolution of said photosensitive elements is at least as good as 0.1 mrad.

3. The system as claimed in one of claims 1 or 2,
**characterized in that** said matrix of the infrared detector (7) comprises at least 640 × 512 photosensitive elements.

4. The system as claimed in claim 3,
**characterized in that** said matrix of the infrared detector (7) comprises 1280 × 1024 photosensitive elements.

5. The system as claimed in one of claims 1 to 4,
**characterized in that** the matrix of said infrared detector (7) consists of photosensitive elements made of indium antimonide.

6. The system as claimed in one of claims 1 to 4,
**characterized in that** the matrix of said infrared detector (7) consists of photosensitive elements made of mercury and cadmium telluride.

7. The system as claimed in any one of claims 1 to 6,
**characterized in that** the time separating a snapshot in an interval between two successive light flashes (5) and a snapshot in synchronism with one of the latter is at most equal to 15 milliseconds.

8. The system as claimed in one of claims 1 to 7,
**characterized in that,**
while reading each image corresponding to a snapshot in synchronism with a light flash, said electronic control means (9) trigger an additional snapshot of said scene giving rise to an additional image the integration time of which is at least approximately identical to that of said image corresponding to a snapshot in synchronism with a light flash and **in that** an image processor (11) is provided that is able to compare the latter image and said additional image to deduce therefrom the position of the image of said missile on said detector.

9. The system as claimed in any one of claims 1 to 8,
**characterized in that** it comprises a computer (24) computing the differential deviation measurement between said missile (2) and said target (3) from information delivered by said infrared detector and relating to the respective positions, in said matrix, of the images (5') corresponding to snapshots in synchronism with said successive light flashes (5) and images (3') corresponding to snapshots in the intervals between said light flashes (5), integrated between 1 and 5 ms.

10. The system as claimed in any one of claims 1 to 9,
**characterized in that** said means (10) able to synchronize the snapshots of said infrared detector (7) with said successive light flashes (5) are temporary.

11. The system as claimed in any one of claims 1 to 9,
**characterized in that** said means (10) able to synchronize the snapshots of said infrared detector (7) with said successive light flashes (5) are permanent.

12. The system as claimed in any one of claims 1 to 11,
**characterized in that** said light flashes (5) are triggered from said missile (2).

13. The system as claimed in any one of claims 1 to 11,
**characterized in that** said light flashes (5) are triggered from electronic control means (9) of said infrared detector (7).

14. The system as claimed in claim 13,
**characterized in that** said electronic control means (9) are able to control the optical emitters (4) of at least two missiles in order for said optical emitters (4) to generate interleaved series of light flashes (5A, 5B).

## Patentansprüche

1. Zielsystem, das geeignet ist, auf ein Ziel (3) hin gerichtet zu werden und einen Abweichungsmesser umfasst, der es ermöglicht, mindestens einen Flugkörper (2) zu lokalisieren, der in der zumindest annähernden Richtung des Ziels fliegt und mit dem ein optischer Sender (4) verbunden ist, der aufeinanderfolgende Lichtblitze (5) im nahen Infrarotbereich erzeugt, wobei der Abweichungsmesser umfasst:
- einen optischen Detektor, der eine Matrix lichtempfindlicher Elemente umfasst, die geeignet sind, die aufeinanderfolgenden Lichtblitze (5) zu erkennen;
- ein optisches System (6), das die Szene beobachtet, in der sich das Ziel (3) und der Flugkörper (2) befinden und in dessen Brennebene der optische Detektor angeordnet ist;
- elektronische Mittel (9) zur Steuerung des optischen Detektors, die geeignet sind, Aufnahmen der Szene durch den Letztgenannten auszulösen und Bilder durch Integration herzustellen; und
- Mittel (10), die geeignet sind, die Bildaufnahmen des optischen Detektors mit den aufeinanderfolgenden Lichtblitzen (5) zu synchronisieren, wobei die Zeit der Integration der Bilder, die Aufnahmen entsprechen, die synchron mit den Lichtblitzen sind, höchstens gleich 200 Mikrosekunden ist; **dadurch gekennzeichnet, dass**
- der optische Detektor ein Infrarotdetektor (7) ist, der nicht nur im nahen Infrarot im Emissionsspektrum des mit dem Flugkörper verbundenen optischen Senders (4) empfindlich ist, sondern auch im mittleren Infrarotbereich zwischen 3 und 5 Mikrometern;
- die lichtempfindlichen Elemente des Infrarotdetektors (7) durch eine geeignete Optik eine Winkelauflösung aufweisen, die mindestens so gut wie 0,3 mrad ist;
- die elektronischen Steuermittel (9) Aufnahmen der Szene durch den Infrarotdetektor (7) nicht nur synchron mit den Lichtblitzen (5) auslösen, sondern auch in den Intervallen zwischen den aufeinanderfolgenden Lichtblitzen, wobei die Zeit der Integration der Bilder, die Aufnahmen in den Intervallen zwischen den aufeinanderfolgenden Lichtblitzen entsprechen, zwischen 1 und 5 Millisekunden beträgt; und
- Anzeigemittel (11) vorgesehen sind, um die Bilder anzuzeigen, die aus den Aufnahmen resultieren, die in den Intervallen zwischen den aufeinanderfolgenden Lichtblitzen erzeugt wurden.

2. System nach Anspruch 1, **dadurch gekennzeichnet, dass** die Winkelauflösung der lichtempfindlichen Elemente mindestens so gut wie 0,1 mrad ist.

3. System nach einem der Ansprüche 1 oder 2, **dadurch gekennzeichnet, dass** die Matrix des Infrarotdetektors (7) mindestens 640 × 512 lichtempfindliche Elemente umfasst.

4. System nach Anspruch 3, **dadurch gekennzeichnet, dass** die Matrix des Infrarotdetektors (7) mindestens 1280 × 1024 lichtempfindliche Elemente umfasst.

5. System nach einem der Ansprüche 1 bis 4, **dadurch gekennzeichnet, dass** die Matrix des Infrarotdetektors (7) aus lichtempfindlichen Elementen aus Indiumantimonid ausgebildet ist.

6. System nach einem der Ansprüche 1 bis 4, **dadurch gekennzeichnet, dass** die Matrix des Infrarotdetektors (7) aus lichtempfindlichen Elementen aus Quecksilber- und Cadmiumtellurid ausgebildet ist.

7. System nach einem der Ansprüche 1 bis 6,
**dadurch gekennzeichnet, dass** die Zeit, die eine Aufnahme in einem Intervall zwischen zwei aufeinanderfolgenden Lichtblitzen (5) und eine synchron mit einem der Letztgenannten erfolgte Aufnahme trennt, höchstens gleich 15 Millisekunden ist.

8. System nach einem der Ansprüche 1 bis 7, **dadurch gekennzeichnet, dass** während der Ablesung jedes Bildes, das einer Aufnahme entspricht, die synchron mit einem Lichtblitz erfolgt ist, die elektronischen Steuermittel (9) eine zusätzliche Aufnahme der Szene auslösen, die ein zusätzliches Bild ergibt, dessen Integrationszeit mindestens annähernd identisch mit jener des Bildes ist, das einer Aufnahme entspricht, die synchron mit einem Lichtblitz erfolgt ist, und dass ein Bildprozessor (11) vorgesehen ist, der geeignet ist, das letztgenannte Bild mit dem zusätzlichen Bild zu vergleichen, um davon die Position des Bilds des Flugkörpers auf dem Detektor abzuleiten.

9. System nach einem der Ansprüche 1 bis 8, **dadurch gekennzeichnet, dass** es eine Rechenvorrichtung (24) umfasst, die die differentielle Abweichung zwischen dem Flugkörper (2) und dem Ziel (3) berechnet, und zwar auf der Basis von Informationen, die der Infrarotdetektor liefert und die sich auf die jeweiligen Positionen von folgenden Bildern in der Matrix beziehen, von den Bildern (5'), die Aufnahmen entsprechen, die synchron mit den aufeinanderfolgenden Lichtblitzen (5) erfolgt sind, und von den Bildern (3'), die Aufnahmen in den Intervallen zwischen den Lichtblitzen (5) entsprechen, deren Integration zwischen 1 und 5 Millisekunden beträgt.

10. System nach einem der Ansprüche 1 bis 9, **dadurch gekennzeichnet, dass** die Mittel (10), die geeignet sind, die Bildaufnahmen des Infrarotdetektors (7) mit den aufeinanderfolgenden Lichtblitzen (5) zu synchronisieren, temporär sind.

11. System nach einem der Ansprüche 1 bis 9, **dadurch gekennzeichnet, dass** die Mittel (10), die geeignet sind, die Bildaufnahmen des Infrarotdetektors (7) mit den aufeinanderfolgenden Lichtblitzen (5) zu synchronisieren, permanent sind.

12. System nach einem der Ansprüche 1 bis 11, **dadurch gekennzeichnet, dass** die Lichtblitze (5) ausgehend von dem Flugkörper (2) ausgelöst werden.

13. System nach einem der Ansprüche 1 bis 11, **dadurch gekennzeichnet, dass** die Lichtblitze (5) ausgehend von den elektronischen Mitteln (9) zur Steuerung des Infrarotdetektors (7) ausgelöst werden.

14. System nach Anspruch 13, **dadurch gekennzeichnet, dass** die elektronischen Steuermittel (9) geeignet sind, die optischen Sender (4) von mindestens zwei Flugkörpern zu steuern, damit die optischen Sender (4) verschachtelte Folgen von Lichtblitzen (5A, 5B) erzeugen.
